# EUROPÄISCHE PATENTSCHRIFT

(11) **EP 4 411 164 B1**
(45) Veröffentlichungstag und Bekanntmachung des Hinweises auf die Patenterteilung: **13.08.2025**
(21) Anmeldenummer: 24020044.4
(22) Anmeldetag: 29.01.2024
(51) Int. Cl.: F16F 15/14

(54) **DÄMPFERANORDNUNGEN FÜR GETRIEBE UND GENERATOREN**
DAMPER ASSEMBLIES FOR TRANSMISSIONS AND GENERATORS
ENSEMBLES AMORTISSEURS POUR TRANSMISSIONS ET GÉNÉRATEURS

(30) Priorität: 03.02.2023 EP 23020065
(43) Veröffentlichungstag der Anmeldung: 07.08.2024
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- EP-A1- 1 286 076
- EP-A2- 1 197 678
- DE-A1- 4 116 841
- JP-U- H0 369 340

## Beschreibung

Die Erfindung betrifft die Dämpfung von durch Rotation bedingten Schwingungen von Getriebe- und Generator-Bauteilen von großen Maschinen und Vorrichtungen, wie zum Beispiel Windkraftanlagen, welche durch den Betrieb dieser Bauteile, insbesondere als Körperschall auftreten, und gegebenenfalls auf die gesamte Vorrichtung oder Maschine übertragen werden können.

Die Erfindung betrifft Dämpfungsanordnungen für konzentrische Funktionsteile von Getrieben, Generatoren und Motoren, wie Rotoren und Statoren, insbesondere Hohlräder von Planetengetrieben von insbesondere Windkraftanlagen, welche durch Anbringung von speziell designten und miteinander verbundenen Schwingungsdämpfer-Einheiten schwingungstechnisch, insbesondere in Bezug auf Körperschall, durch Reduzierung torsional gerichteter Schwingungen, beruhigt werden können, ohne dabei nennenswerten Platz zu beanspruchen.

Torsionsschwingungsdämpfer, insbesondere für Windkraftanlagen, sind vielfach im Stand der Technik bekannt und beschrieben worden. Torsionsschwingungen treten häufig bei sich drehenden Wellen oder Achsen von Getrieben, Generatoren oder Motoren auf und führen zur Erzeugung von Körperschall oder anderer Störungen.

So beschreibt beispielsweise die EP 1 197 678 A2 eine einstellbaren, rotierenden Torsionstilger, bei dem ein Doppel-Konus mit elliptischen Konturen aus einem elastischen Schichtelement zusammen mit der daran befestigten Tilgermasse um die die zu dämpfende Welle oder Achse herum angeordnet ist. Die von der Kreisform abweichende Kontur der beiden Konuselemente bewirkt neben der zu erwartenden Schubverformung auch eine für die dort genannten verwendeten Zwecke nützliche Druckverformung des elastischen Materials. Der beschriebene Torsionstilger ist alleine schon aufgrund seiner relativ voluminöse Ausmaße nur für solche Vorrichtungen geeignet, bei denen ausreichend Platz zur Verfügung steht.

Die EP 3 550 140 A1 beschreibt ein elastisches Lager, welches vorrangig als Hauptlager in Windkraftanlagen für Getriebe und Generator vorgesehen ist. Dieses Lager besteht aus zwei unterschiedlich großen Vieleck-Scheiben, die planparallel ineinander um eine gemeinsame Achse angeordnet und durch entsprechende Pakete von radial ausgerichteten Schichtelementen miteinander verbunden sind, und somit in radiale Richtung steif aber in torsionale Richtung weich genug ist, um in torsionale Richtung Schwingungen, insbesondere Körperschall, zu isolieren. Abgesehen davon dass, auch diese Konstruktion recht viel Platz, insbesondere in radiale Richtung, beansprucht, ist dieses Lager nicht dafür vorgesehen, auf die Eigenfrequenz der Vorrichtung abgestimmt zu werden und ist somit kein Schwingungstilger im eigentlichen Sinn.

Große und antriebsintensive Maschinen haben meist auch große Getriebe, Generatoren oder Motoren, welche im Betrieb der sich drehenden Teile unerwünschte Torsionsschwingungen erzeugen. Diese Kräfte können nicht nur auf Dauer zu Schäden an der Maschine führen sondern auch zur einer erheblichen Geräuschentwicklung.

Windkraftanlagen werden häufig mit Planetengetrieben ausgestattet, da diese die erforderlichen hohen Drehmomente mit großer Übersetzung auf kleinem Raum übertragen können. Die Hohlräder der Planetengetriebe von Windkraftanagen oder vergleichbaren Maschinen können dabei Durchmesser von mehreren Metern annehmen und so leicht Torsionsschwingungen hervorbringen, welche durch angetriebene Planetenräder initiiert werden. In der Regel ist der Platzbedarf in einem Planetengetriebe oder eines vergleichbaren anderen Getriebes oder Generators trotz der erhebliche Ausmaße beschränkt. Übliche Torsionsdämpfer, wie sie im Stand der Technik bekannt sind oder wie sie zum Beispiel in der EP 1 197 678 A2 beschrieben wurden, sind jedoch nur bedingt oder gar nicht geeignet für eine Körperschalldämpfung von solche Anlagen. Generell werden kaum zufriedenstellende Lösungen im Stand der Technik für das genannte Problem angeboten.

Es bestand somit die Aufgabe, einen torsionalen Schwingungsdämpfer für einen großdimensionierten Rotor oder Stator eines Getriebes, Generators oder Motors, und insbesondere für ein Hohlrad eines Planetengetriebes, für große mit hohen Drehmomenten angetriebene Anlagen, insbesondere Windkraftanlagen, zur Verfügung zu stellen, welcher leicht auf die Eigenfrequenz der Anlage eingestellt werden kann, eine hohe Dämpfung unter maximaler Körperschallreduzierung generiert, kontinuierlich am Umfang angebunden ist, wenig Platz trotz notwendig großer Tilgermasse beansprucht, und darüber hinaus leicht zu warten bzw. zu reparieren oder auszutauschen ist.

Die Aufgabe wurde erfindungsgemäß durch Bereitstellung einer im Folgenden und in den Ansprüchen beschriebenen Dämpferanordnung für ein angetriebenes torsional gedämpftes Getriebe- oder Generatorteil, beispielsweise für ein Hohlrad eines Planetengetriebes, oder gelöst.

### Zusammenfassung der Erfindung:

Gegenstand der Erfindung ist eine Dämpferanordnung für ein Funktionsteil eines Getriebes oder Generators oder Motors, umfassend ein Hohlrad eines Planentengetriebes, einen runden Stator oder einen Rotor einer großen Maschine, Vorrichtung oder Anlage zur Reduzierung von in Bezug auf das ausgewählte Bauteil torsional gerichteten Schwingungen, insbesondere Körperschall.

Gegenstand der Erfindung ist weiterhin ein Planetengetriebe, welches die erfindungsgemäße Dämpferanordnung aufweist.

Gegenstand der Erfindung sind letztlich Maschinen und Anlagen, insbesondere Windkraftanlagen, die ein erfindungsgemäßes Planetengetriebe oder ein anderes Getriebe, oder einen Generator umfassen, welches/welcher eine erfindungsgemäße Dämpferanordnung aufweist.

Die erfindungsgemäße Dämpferanordnung umfasst eine Vielzahl von einzelnen Schwingungstilger-Einheiten, welche am Umfang eines ausgewählten, zu dämpfenden konzentrischen Funktionsteils (beispielsweise eines Hohlrades eines Planetengetriebes) angebracht und miteinander verbundenen sind, und in ihrer Gesamtheit einen geschlossenen Ring um das konzentrische Funktionsteil bilden.

Jedes der einzelnen Schwingungstilger-Einheiten der Dämpferanordnung, deren Innenkonturen der Krümmung des umschlossenen zu dämpfenden ausgewählten konzentrischen Funktionsteils entsprechen, umfasst wiederum ein oder mehrere eigentliche Tilger-Elemente, die entsprechend der Geometrie des zu dämpfenden Funktionsteils gestaltet sind.

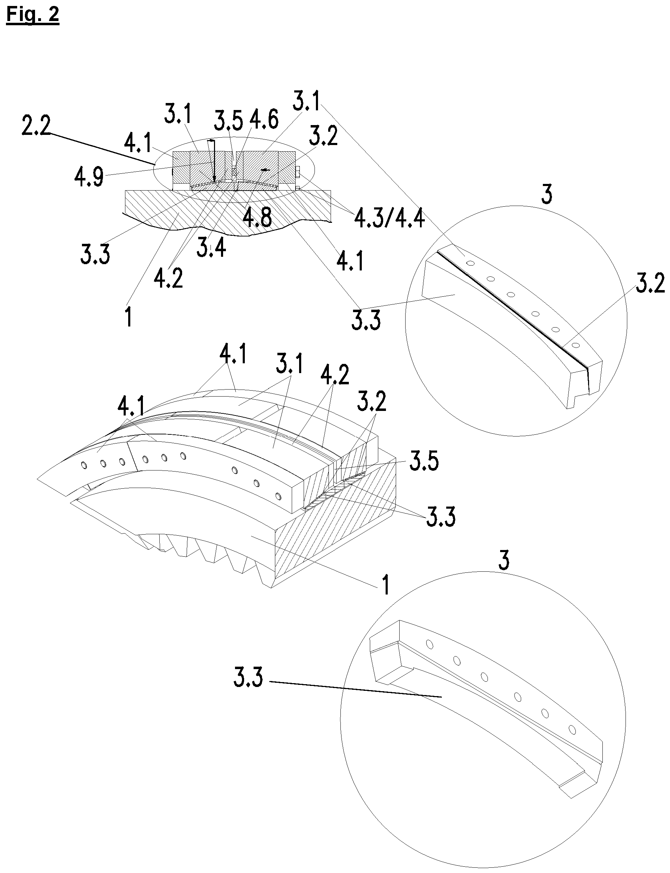

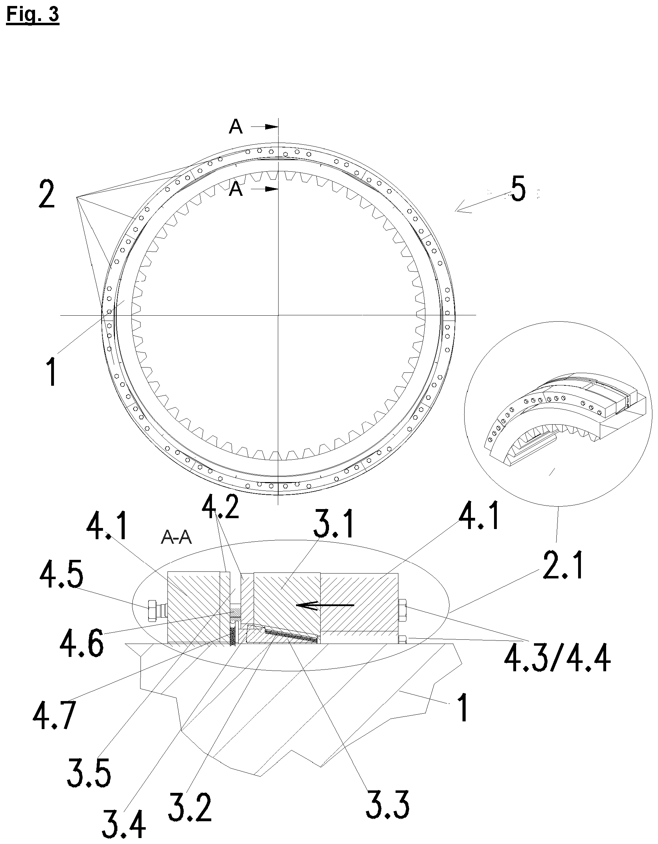

Jedes Tilger-Element einer solchen Schwingungstilger-Einheit umfasst, wie in den Figuren 2 und 3 dargestellt, mehrere funktionell aufeinander abgestimmte Komponenten, nämlich:
(a) ein oder mehrere Schwingungsmassenteile mit jeweils einer runden oder eckigen äußeren Kontur und einer geraden, gegenüber der Umlauffläche des ausgewählten Funktionsteils schräg angeordneten, inneren Kontaktfläche,
(b) ein oder mehrere keilförmige Lager, welche eine mit dem Radius des ausgewählten Funktionsteils gebogene, innere Kontaktfläche und eine gerade, gegenüber der Umlauffläche des ausgewählten Funktionsteils schräg angeordnete, äußere Kontaktfläche aufweisen. Hierbei bilden die geraden, schräg angeordneten äußeren und inneren Kontaktflächen einen jeweils identischen Keilwinkel mit der Umlauffläche des ausgewählten Funktionsteils, und
(c) eine oder mehrere elastische Schichtelemente oder Schichten, welche zwischen der geraden, schräg angeordneten, inneren Kontaktfläche des Schwungmassenteils und der geraden, schrägen, äußeren Kontaktfläche des keilförmigen Lagers so angeordnet und mit diesen Teilen fest verbunden sind, dass sie ihre Stirnflächen gegenüberstehen und gegebenenfalls Kontakt zueinander haben können, und sie in ihrer Gesamtheit in der Seitenansicht ein Vieleck (> 6 Ecken) ergeben, welches das ausgewählte Funktionsteil umgibt.

Weiterhin umfasst jede Schwingungstilger-Einheit eine Vielzahl von Befestigungs- und Spannelementen, so auch vorzugsweise zwei äußere, eine Schwingungstilger-Einheit nach außen abschließende, im Radius des ausgewählten Funktionsteils gekrümmte Seitenteile, als auch Verbindungselemente und / oder Spannelemente, mit deren Hilfe alle Teile einer Schwingungstilger-Einheit oder eines Tilger-Elements so mit einer wirksamen axialen Kraft verbunden und / oder verspannt werden können, dass jede einzelne Schwingungstilger-Einheit und somit auch die gesamte Dämpferanordnung fest mit der Umlauffläche des ausgewählten Funktionsteils, beispielsweise ein feststehendes Hohlrad eines Planetengetriebes, verbunden ist.

### Detaillierte Beschreibung der Erfindung:

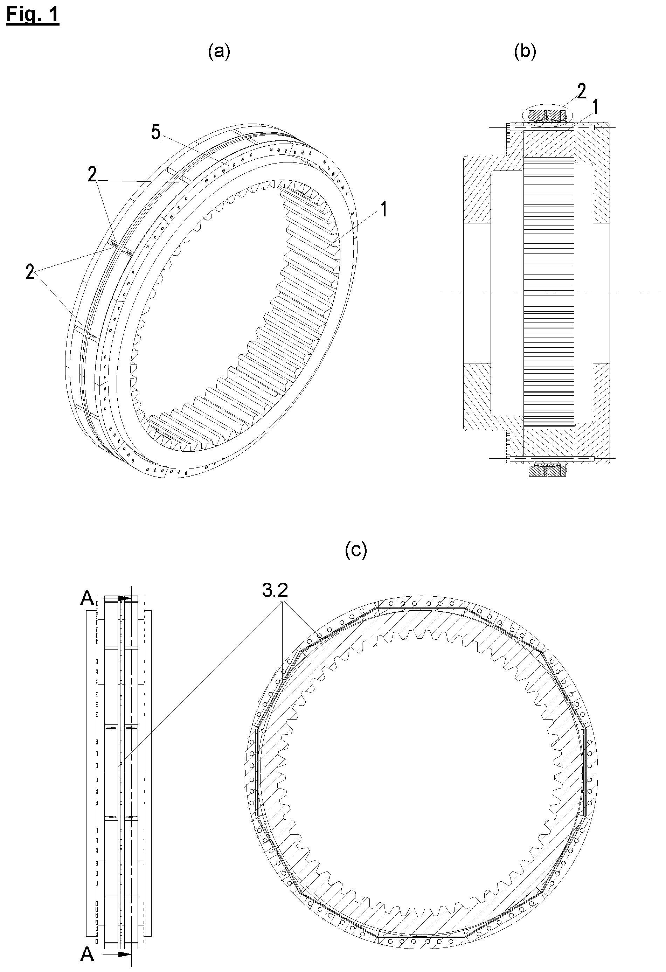

Die erfindungsgemäße Dämpferanordnung (5) ist ringförmig umschließend am Umfang des betreffenden ausgewählten konzentrischen Funktionsteils (1), (Hohlrad des Planetengetriebes, Stators/Rotor von Getriebe, Generator, Motor) angeordnet und gegen diese Funktionsteil verspannt, und ist aus einer Vielzahl von miteinander fest verbundenen, und in ihrer Gesamtheit einen geschlossenen Ring bildenden einzelnen erfindungsgemäßen Schwingungstilger-Einheiten (2) zusammengesetzt, deren Innenkonturen der Außenkontur des umschlossenen jeweils ausgewählten Hohlrades, Stators oder Rotors angepasst sind (Fig. 1).

Je nach Größe des Durchmessers der konzentrischen Funktionsteils (1), welcher z.B. bei heutigen Windkraftanlagen meist zwischen ein und mehr als drei Metern liegt, können vorzugsweise 8 - 16, insbesondere 10 - 12 solcher Schwingungstilger-Einheiten (2) einen geschlossenen Ring um das Funktionsteil (1) bilden.

Die Ausmaße der Schwingungstilger-Einheiten (2) richten sich ebenfalls nach der Größe des Funktionsteils (1). Bei Hohlrädern von heutigen Windkraftanlagen können die erfindungsgemäßen Schwingungstilger-Einheiten (2) eine Breite zwischen etwa 200 mm und 400 mm, insbesondere etwa 300 mm, und eine Dicke zwischen etwa 80 mm und 150 mm, insbesondere etwa 100 mm, aufweisen.

Die erfindungsgemäßen Schwingungstilger-Einheiten (2, 2.1, 2.2) umfassen wiederum im Wesentlichen die eigentlichen Dämpfungselemente, nämlich die erfindungsgemäßen Tilger-Elemente (3) sowie Teile (4) zur Befestigung, Verbindung und Vorspannung dieser Tilger-Elemente untereinander und mit dem Funktionsteil (1).

Erfindungsgemäß kann eine Schwingungstilger-Einheit (2) mehrere Tilger-Elemente (3) umfassen:
In einer Ausführungsform (2.2) der Erfindung weist eine Schwingungstilger-Einheit (2) ein erstes und ein zweites Tilger-Element (3) auf, welche gegenüberliegen und in Bezug auf die Rotationsachse des Funktionsteils (1) axial angeordnete sind (Fig. 2). In diesem Fall sind die keilförmigen vorspannbaren Lager (3.3) in doppelter Ausführung vorhanden und so angeordnet, dass ein Doppelkeil vorliegt mit jeweils identischem gegenüberliegenden Keilwinkeln.(3.4). Bei dieser Ausführungsform liegen somit mindestens zwei Schwingungsmassenteile (3.1) vor, die jeweils über einem keilförmigen Lager angeordnet sind.

In einer alternativen Ausführungsform (2.1) der Erfindung weist eine Schwingungstilger-Einheit (2) nur ein erstes Tilger-Element (3) auf. Das zweite Tilger-Element mit einem entsprechenden zweiten keilförmigen Lager (3.3) und mindestens einem Schwingungsmassenteil (3.1) ist hier ersetzt nur durch das verbliebene Seitenteil (4.1) (Fig. 3). Bei dieser Variante ist es daher funktionell notwendig, ein elastisches Gegenspannelement (4.7) vorzusehen, welches das verbliebene Seitenteil (4.1) mit dem Schwingungsmassenteil (3.1) des ersten Tilger-Elementes gegeneinander verspannt. Das Gegenspannelement (4.7) ist vorzugsweise ein elastischer Ring, der konzentrisch um das Funktionsteil (1) angeordnet ist.

Jedes einzelne Tilger-Element (3) der erfindungsgemäßen Schwingungstilger-Einheiten (2) umfasst wiederum ein oder mehrere Schwingungsmassenteile (3.1), ein oder mehrere keilförmige Lager (3.3), sowie eine oder mehrere elastische Schichtelemente (3.2), wobei auf den keilförmigen Lagern (3.3) die Schwingungsmassenteile (3.1), getrennt durch die elastischen Schichtelemente (3.2), gelagert sind und dadurch frei schwingen können.

Die Schwingungsmassenteile (3.1) können jeweils sowohl eine kreisförmige als auch eine eckige oder abgerundete äußere Kontur besitzen, und weisen eine gerade, gegenüber der Umlauffläche des ausgewählten Funktionsteils (1) (Hohlrad, Stator oder Rotor) schräg angeordnete, innere Kontaktfläche.

Die keilförmigen Lager (3.3) weisen eine mit dem Radius des ausgewählten Funktionsteils gebogene, innere erste Kontaktfläche auf, mit der sie am Umfang des konzentrischen Funktionsteils (1) ganz oder teilweise formschlüssig anliegen können, sowie eine gerade gegenüber der Umlauffläche des betreffenden Funktionsteils schräg angeordnete, äußere zweite Kontaktfläche auf (mit welcher sie an der inneren ersten Kontaktfläche des Massenteils (3.1) anliegen können), wobei die geraden, schräg angeordneten äußeren und inneren, ersten und zweiten Kontaktflächen einen jeweils identischen Keilwinkel (3.4) mit der Umlauffläche des ausgewählten Funktionsteils bilden, welcher die Schrägung der inneren Kontaktfläche des darüber angeordneten Schwingungsmassenteils (3.1) festlegt. Der Keilwinkel (3.4) kann dabei einen Wert zwischen 5° und 20°, vorzugsweise zwischen 8° und 12°, annehmen. Er muss in jedem Fall so gewählt werden, dass eine ausreichend starke axiale Verspannung der Schwingungstilger-Einheiten (2) erzielt werden kann, damit diese Einheiten als auch die gesamte erfindungsgemäße Dämpferanordnung (5) fest am Umlauf des konzentrischen Funktionsteils (1) anliegen. Das geschieht über die keilförmigen Lager (3.3), welche mit ihrer gekrümmten ersten unteren Kontaktfläche formschlüssig mit der Umlauffläche des ausgewählten Funktionsteils (1) durch axiale/tangentiale Vorspannkräfte mittels elastischer Schichten (3.2) verbunden werden.

Die erwähnten elastischen Schichtelemente (3.2) sind zwischen der geraden, schräg angeordneten, inneren Kontaktfläche eines Schwingungsmassenteils (3.1) und der geraden, schrägen, äußeren Kontaktfläche eines keilförmigen Befestigungsteils (3.3) angeordnet und mit diesen Teilen fest verbunden. Eine elastische Schicht (3.2) weist somit die gleiche Schrägung wie die erwähnten schrägen Kontaktflächen der Elemente (3.1) und (3.3) auf.

Diese Anordnung der elastischen Schicht innerhalb eines Tilger-Elements (3) und die ringförmige Anordnung aller Tilger-Elemente (3) auf der Umlauffläche der erfindungsgemäßen Dämpferanordnung (5), und damit aller elastischen Schichten (3.2), ergibt somit in der Seitanansicht des konzentrischen Funktionsteils (1) die Geometrie eines Polygons aus sich an ihren Stirnseiten gegenüberliegenden, flachen und schräg gestellten, elastischen Schichten (3.2), welche das ausgewählte Funktionsteil (1), also zum Beispiel ein Hohlrad, umschließen. Somit wird eine torsionale Bewegung der Schwingungsmassenteile (3.1) vollständig um den ganzen Ring der erfindungsgemäßen Dämpferanordnung (5) herum ermöglicht.

Die keilförmigen über die elastischen Schichtelemente vorgespannten Befestigungsteile (3.3) - und nur diese - sind, wie erwähnt, mit ihrer gekrümmten Unterseite formschlüssig mit der Umlauffläche des ausgewählten Funktionsteils (1) durch axiale/tangentiale, über die elastische Schicht vermittelte Anpresskräfte verbunden. Somit können die Schwingungsmassenteile (3.1) oberhalb davon zusammen mit den erwähnten Teilen (4) zur Befestigung, Verbindung und Vorspannung bei Einwirken von torsionalen äußeren Kräften frei schwingen.

Jede Schwingungstilger-Einheit (2) weist, wie erwähnt, Teile (4) zur Befestigung, Verbindung und Vorspannung auf. Diese Teile tragen neben den Schwingungsmassenteilen (3.1) alle zur Gesamtschwingungsmasse bei, da sie alle so angeordnet und befestigt sind, dass sie gemeinsam auf den elastischen Schichten (3.2) lagern und damit schwingen können.

Jedes Schwingungstilger-Einheit (2) umfasst weiterhin erfindungsgemäß ein -axial gesehenlinkes äußeres und ein rechtes äußeres, im konzentrisch zum Radius des ausgewählten Funktionsteils (1) gekrümmtes erstes Seitenteil (4.1), zwischen denen ein Schwingungsmassenteil (3..1) angeordnet ist. Der Radius der konzentrisch gekrümmten Seitenteile (4.1) muss dabei etwas größer sein als der Radius des Funktionsteils (1), das es gegenüber diesem frei beweglich sein soll. Die beiden Seitenteile (4.1) schließen eine Schwingungstilger-Einheit (2) nach beiden Seiten hin ab.

Bei einer weiteren Ausführungsform der Erfindung kann zusätzlich mindestens ein inneres, ebenfalls konzentrisch zum Radius des ausgewählten Funktionsteils (1) gekrümmtes Versteifungsteil (4.2) vorgesehen werden, welches nach erfolgtem Vorspannen und Anpressen des Tilger-Elements (3) an das ausgewählte Funktionsteil (1) die jeweilige Schwingungstilger-Einheit (2, 2.1, 2.2) gegen Verformung versteift. Die Versteifungsteile sind also ebenfalls gegenüber dem Funktionsteil (1) beweglich und können mitschwingen. Vorzugsweise sind zwei solcher inneren Versteifungsteile (4.2) vorgesehen, insbesondere zwischen einem Schwingungsmassenteil (3.1) und einem äußeren Befestigungsteil (4.1) oder zwischen zwei gegenüberliegenden Schwingungsmassenteilen (3.1).

Die Schwingungsmassenteile (3.1), die begrenzenden Befestigungsteile (4.1) und ggf. die inneren Versteifungsteile (4.2) werden durch Verbindungselemente (4.3), vorzugsweise Verbindungsschrauben, welche durch entsprechende Bohrungen in den besagten Teilen geführt sind, miteinander fest verbunden.

Zwischen zwei gegenüberliegenden Schwingungsmassenteilen (3.1) einer Schwingungstilger-Einheit (2), oder zwischen einem Schwingungsmassenteil (3.1) und einem gegenüberliegenden äußeren Befestigungsteil (4.1) ist erfindungsgemäß ein einstellbarer Zwischenraum (3,5) vorgesehen, welcher erlaubt, die Steifigkeit des jeweiligen Funktionsteils (3) zu variieren und somit die Frequenz einer Schwingungstilger-Einheit (2) an eine zu dämpfende Frequenz anzupassen.

Dies geschieht mit Hilfe von entsprechend angeordneten und platzierten Spannelementen (4.4, 4.5), vorzugsweise Spannschrauben (4.4) und Gegenspannschrauben (4.5) und in Torsionsrichtung versteifenden Distanzelementen (4.6), welche die Bauteile (3.1),(4.1) und gegebenenfalls die Bauteile (4.2) gegeneinander verspannen.

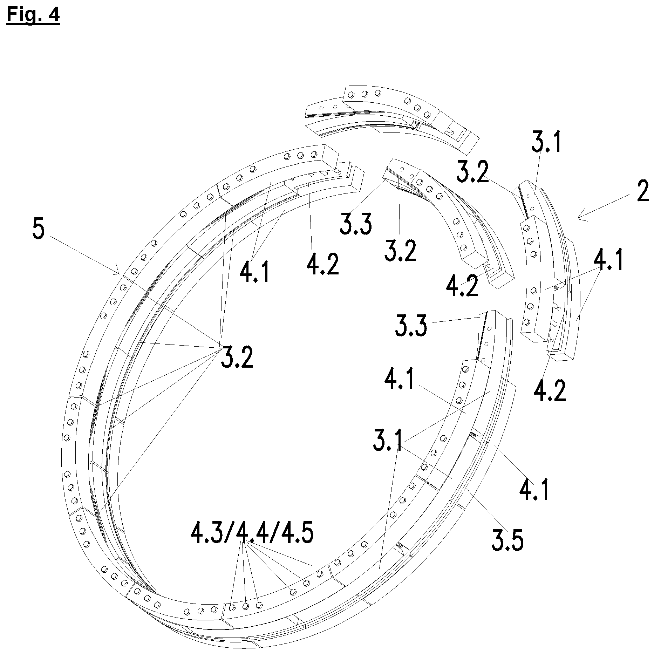

Erfindungsgemäß werden die einzelnen Schwingungstilger-Einheiten (2) über die genannten Verbindungselemente (4.3) miteinander durch erzeugte Überlappungsbereiche zweier benachbarter Schwingungstilger-Einheiten (2) miteinander verbunden wie die Glieder einer Kette (Fig. 4). Dadurch erst ergibt die Dämpferanordnung (5) einen durchgehenden geschlossenen und stabilen Ring miteinander verbundener Schwingungstilger-Einheiten (2), welcher fest mit der Umlauffläche des ausgewählten Funktionsteils (1) verbunden und mit dieser verspannt werden kann.

Die Überlappungsbereiche der einzelnen Schwingungstilger-Einheiten (2) werden beispielsweise erfindungsgemäß dadurch erzeugt, dass die beiden äußeren gebogenen Befestigungsteile (4.1) einer ersten Schwingungstilger-Einheit (2) gegenüber dem Tilger-Element (3) der selben Einheit in der Weise verschoben sind, dass sie mit einem freiliegenden Tilger-Element (3) einer benachbarten zweiten Schwingungstilger-Einheit (2), dessen Befestigungsteile (4.1) in gleicher Weise verschoben sind, überlappend verbunden sind.

Im Folgenden wird die Erfindung anhand der Abbildungen weiter näher erläutert. Als konzentrisches Funktionsteil (1) wird hier exemplarisch ein Hohlrad eines Planetengetriebes beschrieben. Dies soll die Erfindung aber nicht auf diese Anwendung einschränken, sondern kann generell auf alle größeren konzentrischen Funktionsteile von angetriebenen Anlagen angewendet werden.
Fig.1 Fig. 1(a) zeigt in perspektivischer Sicht ein Hohlrad (1) eines Planetengetriebes. Auf dem Zahnkranz laufen die Planetenräder (nicht gezeigt). Das Hohlrad (1) ist an seinem Umlauf von einer ringförmig geschlossenen erfindungsgemäßen Dämpferanordnung (5) umschlossen. Die Dämpferanordnung wird gebildet aus einzelnen miteinander verbundenen Schwingungstilger -Einheiten (2), die aus Teilen (3, 4) zusammengesetzt sind, welche in den Figuren 2 und 3 näher beschrieben sind.
Fig. 1(b) zeigt ein entsprechend ausgestattetes Hohlrad in der Seitenansicht. Das Hohlrad ist hier mit einem Gehäuse oder Träger verbunden und somit feststehend.
Fig. 1(c) zeigt eine andere Seitenansicht (linkes Bild) und eine Draufsicht (rechtes Bild) auf ein Hohlrad eines Planetengetriebes. Hier sind lediglich die Anordnungen der elastischen Schichten (3.2) über den Umfang des Hohlrades verteilt, gekennzeichnet, welche in ihrer Gesamtheit ein Vieleck (hier ein 12-Eck) aus sich an den Stirnseiten berührenden elastischen Schichten oder Schichtelementen bilden.
Fig. 2 zeigt Ausschnitte / Einzelheiten einer von mehreren erfindungsgenäßen Schwingungstilger-Einheit (2) im Querschnitt, welche auf der Umlauffläche eines Hohlrades (1) lagert. Die Schwingungstilger-Einheit (2) umfasst eine Anordnung (2.2) mit einem linken und einem rechten Tilger-Element (3) sowie Befestigungs- und Verbindungsteile (4) und ist folgendermaßen aufgebaut:
   Ein linkes und ein rechtes keilförmiges Lager (3.3) sind in der Weise gegenüber positioniert , dass ein Doppelkeil entsteht, welcher zur Umlauffläche des Hohlrades (1) geöffnet ist. Die Lager (3.3) haben einen identischen Keilwinkel (3.4) in Bezug auf die Ebene der Umlauffläche des konzentrischen Funktionsteils (1) bzw. in Bezug auf die Längsachse desselbigen. Die Lager (3.3) weisen eine gekrümmte Unterseite oder Kontaktfläche auf, so dass sie formschlüssig auf der Umlauffläche des Hohlrades aufliegen können. Durch den gewählten Keilwinkel (3.4) eines jeden Lagers (3.3) wird eine obere schräge, nicht gekrümmte ebene Kontaktfläche gebildet, auf welcher eine elastische Schicht (3.2) mit einer zum Beispiel bei Windkraftanlagen notwendigen Dicke zwischen 4 mm bis 12 mm, vorzugsweise 5 mm bis 8 mm, fest angebracht ist. Diese elastische Schicht eines Keillagers (3.3) ist somit so beschaffen, dass sie durch das Keilprofil die zum Erreichen der erforderliche Torsionsfrequenz eine torsionale hohe Steifigkeit erreicht.

Auf der oberen Seite der schräg angeordneten elastischen Schicht (3.2) jedes der beiden linken und rechten Tilger-Elemente (3) ist jeweils ein Schwingungsmassenteil (3.1) angebracht, welches eine mit einem Keilwinkel (3.4) angeschrägte untere Kontaktfläche besitzt, und somit mit der elastischen Schicht (3.2) ebenfalls fest verbunden werden ist.

Jedes der beiden Schwingungsmassenteile (3.1) wird nach außen durch ein linkes, bzw. rechtes Seitenteil (4.1) begrenzt. Diese Seitenteile weisen Bohrungen und / oder Gewinde für entsprechende Verbindungs- und Spannvorrichtungen (4, 4.3, 4.4) auf, mit denen die Massenteile (3.1) über die elastischen Schichtelemente (3.2) und die keilförmigen Lager (3.3) gegeneinander mit einer axialen Kraft (4.8) verspannt werden können, deren radialer Vektor (4.9) dafür sorgt, dass das Tilger-Element (3.3) und damit die gesamte Schwingungstilger-Einheit (2) an die Umlauffläche des zu dämpfenden Hohlrades (1) gepresst wird.

Jedes der beiden Schwingungsmassenteile (3.1) wird nach innen durch ein Versteifungsteil oder Stützblech (4.2) begrenzt, welches entsprechend der äußeren Seitenteile (4.1) gebogen ist und verhindern soll, dass sich die Schwingungstilger-Einheit (2) bei Verspannung der einzelnen Teile verformt.

Zwischen den beiden Schwingungsmassenteilen (3.1), beziehungsweise zwischen den gegenüberliegenden Versteifungsteilen (4.2) ist erfindungsgemäß ein einstellbarer Zwischenspalt bzw. Zwischenraum (3.5) vorgesehen, welcher durch ein Distanzelement (4.6), z.B. eine verformungssteife Distanzhülse, oder eine Gegenspannelement (4.5), z.B. eine Gegenspannschraube (nicht gezeigt), gebildet wird. Durch die Verstellbarkeit der Vorspannung kann die Dämpfungsanordnung (5) an die Eigenfrequenz des zu dämpfenden Systems (Getriebe, Generator) angepasst werden.

Die Kreis-Ausschnitte der Fig. 2 zeigen perspektivisch zwei Ausführungsformen eines erfindungsgemäßen Tilger-Elementes. Dabei weist das keilförmige Lagerteil (3.3) eine durchgehende gekrümmte untere Kontaktfläche auf (oberer Kreis-Ausschnitt), oder nur an den Enden angebrachte lokale Bereiche oder Zonen (unterer Kreis-Ausschnitt), die mit dem konzentrischen Funktionsteil (1) in unmittelbaren Kontakt stehen, während der Rest der unteren Fläche keinen Kontakt hat. Die keilförmigen Lager-Elemente (3.1) können ganz oder teilweise sowohl aus Stahl als auch aus Kunststoffmaterial gefertigt sein.

Fig. 3 zeigt im unteren Bild Ausschnitte / Einzelheiten eine von mehreren erfindungsgenäßen Schwingungstilger-Einheiten (2) im Querschnitt, welche auf der Umlauffläche eines Hohlrades (1) lagert analog Fig. 2.

Das Bauteil (2) umfasst jedoch nur ein einziges, hier rechts angeordnete Tilger-Element (3) mit den beschriebenen Komponenten (3.1, 3.2. 3.3) sowie Befestigungs- und Verbindungsteile (4).

Das Schwingungsmassenteil (3.1) dieses einzigen Tilger-elements (3) ist außen wiederum von einem rechten Seitenteil (4.1) begrenzt. Linksseitig zum Zwischenraum (3.5) hingewandt, wird das Schwingungsmassenteil (3.1) durch ein erstes Versteifungsteil (4.2) abgegrenzt.. Auch hier, lagert das Schwingungsmassenteil (3.1) mit seiner unteren schrägen und planen Kontaktfläche auf der oberen schrägen und planen Kontaktfläche des einzigen keilförmigen Lagers (3.3) mit dem Keilwinkel (3.4).

Gegenüber dem Schwingungsmassenteil (3.1) mit dem ersten Versteifungsteil (4.2) und durch den Zwischenraum (4.5) getrennt, ist ein linkes Seitenteil (4.1) angeordnet, welches ebenfalls von einem zweiten Versteifungsteil (4.2) nach innen flankiert wird.

Der Zwischenraum (3.5) wird über eine Gegenspannschraube (4.5) eingestellt. Die Vorspannung erfolgt axial durch die Spannschraube (4.4). Weitere Schrauben (4.3) sorgen für die Verbindung der einzelnen Teile der Schwingungstilger-Einheit (2). Bei der gezeigten Ausführungsform ist zusätzlich ein elastischen Gegenspannlager (4.7) vorgesehen.

Das obere Bild der Fig. 3 zeigt für diese Ausführungsform der Erfindung nochmals ein vollständiges Planetengetriebe-Hohlrad, welches von einem geschlossenen Ring von 12 Schwingungstilger-Einheiten (2) mit einseitig vorgespannten Lagerteil (3.3, 2.1) umgeben ist.

Fig. 4 zeigt eine perspektivische Sicht einer erfindungsgemäßen Dämpferanordnung, welche aus insgesamt einzelnen 12 Schwingungstilger-Einheiten (2) zusammengesetzt ist.

Die Schwingungstilger-Einheiten (2) sind in der Weise miteinander verbunden, dass Teilelemente, wie die beiden äußeren Seitenteile (4.1) einer Schwingungstilger-Einheit so gegenüber den inneren Tilger-Elementen (3.1, 3.2, 3.3) in torsionale Richtung verschoben sind, dass sie mit den inneren Tilger-Elementen (3.1, 3.2, 3.3) einer benachbarten Schwingungstilger-Einheit, bei der die äußeren Seitenteile in gleicher Weise und in gleicher Richtung torsional verschoben wurden, überlappen und mit den inneren Tilger-Elementen (3,1, 3.2, 3.3) der benachbarten Einheit (2) fest verbunden werden können.

Somit greifen die Teile von benachbarten Schwingungstilger-Einheiten wie die Glieder einer Ketter ineinander und formen so eine kompakte durchgehende und geschlossen erfindungsgemäße Dämpferanordnung (5).

Angegeben sind auch die Positionen der Bauteile, welche in Fig.2 und Fig. 3 bereits erörtert wurden.

## Patentansprüche

1. Dämpferanordnung für ein konzentrisches Funktionsteil eines Getriebes oder Generators oder Motors, ausgewählt aus einem Hohlrad eines Planentengetriebes, einem Stator oder einem Rotor einer großen Maschine oder Vorrichtung, zur Reduzierung von in Bezug auf das ausgewählte Bauteil torsional gerichteten Schwingungen, insbesondere Körperschall,
**dadurch gekennzeichnet, dass** die Dämpferanordnung (5) eine Vielzahl von am Umfang des zu dämpfenden ausgewählten konzentrischen Funktionsteils (1) angebrachten, miteinander verbundenen, und in ihrer Gesamtheit einen geschlossenen Ring bildenden, einzelnen Schwingungstilger-Einheiten (2) umfasst, deren Innenkonturen der Krümmung des umschlossenen zu dämpfenden ausgewählten Funktionsteils (1) entsprechen, und die jeweils mindestens ein Tilger-Element (3) sowie eine Vielzahl von Teilen (4) zur Befestigung, Verbindung und Vorspannung aufweisen, wobei
(i) jedes Tilger-Element (3) umfasst:
(a) ein oder mehrere Schwingungsmassenteile (3.1) mit jeweils einer runden oder eckigen äußeren Kontur und einer geraden, gegenüber der Umlauffläche des ausgewählten Funktionsteils (1) schräg angeordneten, inneren Kontaktfläche,
(b) ein oder mehrere keilförmige Lager (3.3), welche ganz oder teilweise eine mit dem Radius des ausgewählten Funktionsteils (1) gebogene, innere Kontaktfläche, und eine gerade gegenüber der Umlauffläche des ausgewählten Funktionsteils (1) schräg angeordnete, äußere Kontaktfläche aufweisen,
wobei die geraden, schräg angeordneten äußeren und inneren Kontaktflächen einen jeweils identischen Keilwinkel (3.4) mit der Umlauffläche des ausgewählten Funktionsteils (1) bilden,
(c) eine oder mehrere elastische Schichtelemente oder Schichten (3.2), welche zwischen der geraden, schräg angeordneten, inneren Kontaktfläche des Schwungmassenteils (3.1) und der geraden, schrägen, äußeren Kontaktfläche des keilförmigen Lagers (3.3) so angeordnet und mit diesen Teilen fest verbunden sind, dass sie in ihrer Gesamtheit in der Seitenansicht die Geometrie eines Polygons ergeben, welches das ausgewählte Funktionsteil (1) umgibt, und
(ii) die Teile (4) mindestens ein äußeres, eine Schwingungstilger-Einheit (2) nach außen abschließendes, mit einem größeren, konzentrisch zum Radius des ausgewählten Funktionsteils (1) gekrümmten Seitenteil (4.1), sowie Verbindungselemente (4.3) und / oder Spannelemente (4.4, 4.5) umfassen, mit deren Hilfe alle Teile einer Schwingungstilger-Einheit (2) so mit einer axialen Kraft (4.8) verbunden und / oder verspannt zu werden, dass jede Schwingungstilger-Einheit (2) und somit auch die gesamte Dämpferanordnung (5) fest mit der Umlauffläche des ausgewählten Funktionsteils (1) verbunden ist.

2. Dämpferanordnung nach Anspruch 1, **dadurch gekennzeichnet, dass** die Teile (4) zur Befestigung, Verbindung und Vorspannung mindestens ein mit einem größeren, konzentrisch zum Radius des ausgewählten Funktionsteils (1) gebogenes, inneres Versteifungsteil (4.2) umfassen, welches nach erfolgtem Vorspannen und Anpressen des Tilger-Elements (3) an das ausgewählte Funktionsteil (1) die jeweilige Schwingungstilger-Einheit (2) versteift.

3. Dämpferanordnung nach Anspruch 2, **dadurch gekennzeichnet, dass** ein inneres Versteifungssteil (4.2) an einem Schwingungsmassenteil (3.1) und / oder an einem äußeren Seitenteil (4.1) angebracht ist.

4. Dämpferanordnung nach einem der Ansprüche 1 - 3, **dadurch gekennzeichnet, dass** zwischen zwei gegenüberliegenden Schwingungsmassenteilen (3.1) einer Schwingungstilger-Einheit (2), oder zwischen einem Schwingungsmassenteil (3.1) und einem gegenüberliegenden äußeren Seitenteilteil (4.1) ein einstellbarer Zwischenraum (3,5) vorgesehen ist, wodurch die Steifigkeit des jeweiligen Funktionsteils (3) variiert und somit die Frequenz einer Schwingungstilger-Einheit an eine zu dämpfende Frequenz angepasst werden kann.

5. Dämpferanordnung nach Anspruch 4, **dadurch gekennzeichnet, dass** der Zwischenraum (3.5) durch ein oder mehrere die Schwingungstilger-Einheit (2) in Torsionsrichtung versteifende Distanzelemente (4.6) oder durch Gegenspannelemente (4.5) einstellbar ist.

6. Dämpferanordnung nach einem der Ansprüche 1 - 5, **dadurch gekennzeichnet, dass** die Verbindungselemente (4.3) und die Spannelemente (4.4)(4.5) Verbindungs- oder Spannschrauben sind, welche die Bauteile (3.1),(4.1) und gegebenenfalls die Bauteile (4.2) miteinander verbindet und / oder verspannt.

7. Dämpferanordnung nach einem der Ansprüche 1 - 6, **dadurch gekennzeichnet, dass** eine Ausführungsform (2.2) einer Schwingungstilger-Einheit (2) zwei gegenüberliegende Tilger-Elemente (3) aufweist mit jeweils einem keilförmigen Lager (3.3), einer elastischen Schicht (3.2) und einem Schwingungsmassenteil (3.1), wobei die beiden Tilger-Elemente (3) so angeordnet sind, dass die keilförmigen Lager (3.3) einen Doppelkegel bilden mit einer radial nach innen ausgerichteten Kegelöffnung.

8. Dämpferanordnung nach einem der Ansprüche 1 - 6, **dadurch gekennzeichnet, dass** eine Ausführungsform (2.1) einer Schwingungstilger-Einheit (2) nur ein Tilger-Element (3) aufweist mit einem einzigen keilförmigen Lager (3.3), einer elastischen Schicht (3.2) und einem Schwingungsmassenteil (3.1), sowie ein dem einzigen Tilger-Element (3) gegenüberliegendes Seitenteil (4.1), welches über ein elastisches, das Funktionsteil (1) ringförmig umschließendes Gegenspannlager (4.7) mit dem besagten einzigen Tilger-Element (3) verbunden ist.

9. Dämpferanordnung nach einem der Ansprüche 1 - 8, **dadurch gekennzeichnet, dass** die einzelnen Schwingungstilger-Einheiten (2, 2.1, 2.2) durch einzelne überlappende Bauteile benachbarter Schwingungstilger-Einheiten miteinander verbunden sind, so dass die Dämpferanordnung (5) einen kompakten, geschlossenen und anliegenden, vorgespannten Ring um das ausgewählte Funktionsteil (1) ergibt.

10. Dämpferanordnung nach Anspruch 9, **dadurch gekennzeichnet, dass** die beiden äußeren gebogenen Seitenteile (4.1) einer ersten Schwingungstilger-Einheit (2, 2.1, 2.2) gegenüber einem Tilger-Element (3) der selben Einheit in der Weise torsional verschoben sind, dass sie mit einem freiliegenden Tilger-Element (3) einer benachbarten zweiten Schwingungstilger-Einheit (2, 2.1, 2.2), dessen Seitenteile (4.1) in gleicher Weise und in gleicher Richtung verschoben sind, überlappend verbunden sind.

11. Dämpferanordnung nach einem der Ansprüche 1 - 10, **dadurch gekennzeichnet, dass** das ausgewählte konzentrische Funktionsteil (1) ein feststehendes Hohlrad eines Planetengetriebes ist.

12. Verwendung einer Dämpferanordnung nach einem der Ansprüche 1 bis 11 zur Dämpfung und Entkopplung von Körperschall in einer Windkraftanlage.

13. Planetengetriebe für eine Windkraftanlage, **dadurch gekennzeichnet dass** es eine Dämpferanordnung gemäß Anspruch 11 aufweist.

14. Windkraftanlage umfassend Turm, Rotor-Blätter, Gondel ,Getriebe und Generator, **dadurch gekennzeichnet , dass** sie ein Planetengetriebe gemäß Anspruch 13 aufweist.

## Claims

1. Damper arrangement for a concentric functional part of a transmission or generator or motor, selected from a ring gear of a planetary gear, or a stator or a rotor of a large machine or device, for reducing torsionally directed vibrations, in particular structure-borne noise, with respect to the selected component,
**characterized in that** the damper arrangement (5) comprises a plurality of individual vibration mass damper units (2) which are attached to the circumference of the selected concentric functional part (1) to be damped, are connected to one another and, as a whole, form a closed ring, the inner contours of which units correspond to the curvature of the enclosed selected functional part (1) to be damped, and which units each have at least one mass damper element (3) and a plurality of parts (4) for fastening, connecting and preloading,
(i) each mass damper element (3) comprising:
(a) one or more vibration mass parts (3.1), each having a round or angular outer contour and a straight inner contact surface arranged obliquely with respect to the circumferential surface of the selected functional part (1),
(b) one or more wedge-shaped bearings (3.3), which have, fully or partially, an inner contact surface curved with the radius of the selected functional part (1) and a straight outer contact surface arranged obliquely with respect to the circumferential surface of the selected functional part (1), the straight, obliquely arranged outer and inner contact surfaces each forming an identical wedge angle (3.4) with the circumferential surface of the selected functional part (1),
(c) one or more elastic layer elements or layers (3.2) which are firmly connected to and arranged between the straight, obliquely arranged, inner contact surface of the vibration mass part (3.1) and the straight, oblique, outer contact surface of the wedge-shaped bearing (3.3) such that, as a whole, they result in the geometry of a polygon which surrounds the selected functional part (1) in side view, and
(ii) the parts (4) comprise at least one outer side part (4.1) which closes off a vibration mass damper unit (2) on the outside and, with a greater, is curved concentrically to the radius of the selected functional part (1), and connecting elements (4.3) and/or clamping elements (4.4, 4.5) which allow all parts of a vibration mass damper unit (2) to be connected and/or clamped with an axial force (4.8) such that each vibration mass damper unit (2) and therefore also the entire damper arrangement (5) is firmly connected to the circumferential surface of the selected functional part (1).

2. Damper arrangement according to claim 1, **characterized in that** the parts (4) for fastening, connecting and preloading comprise at least one inner reinforcing part (4.2) which is, with a greater, curved concentrically to the radius of the selected functional part (1) and reinforces the relevant vibration mass damper unit (2) after the mass damper element (3) has been preloaded and pressed onto the selected functional part (1).

3. Damper arrangement according to claim 2, **characterized in that** an inner reinforcing part (4.2) is attached to a vibration mass part (3.1) and/or to an outer side part (4.1).

4. Damper arrangement according to any of claims 1 - 3,
**characterized in that** an adjustable gap (3,5) is provided between two opposite vibration mass parts (3.1) of a vibration mass damper unit (2), or between a vibration mass part (3.1) and an opposite outer side part (4.1), as a result of which the rigidity of the relevant functional part (3) varies and therefore the frequency of a vibration mass damper unit can be adapted to a frequency to be damped.

5. Damper arrangement according to claim 4, **characterized in that** the gap (3.5) is adjustable by one or more spacer elements (4.6) reinforcing the vibration mass damper unit (2) in the torsional direction or by counter-loading elements (4.5).

6. Damper arrangement according to any of claims 1 - 5,
**characterized in that** the connecting elements (4.3) and the clamping elements (4.4)(4.5) are connecting or clamping screws which connect and/or clamp the components (3.1),(4.1) and optionally the components (4.2) to one another.

7. Damper arrangement according to any of claims 1 - 6,
**characterized in that** an embodiment (2.2) of a vibration mass damper unit (2) has two opposite mass damper elements (3), each having a wedge-shaped bearing (3.3), an elastic layer (3.2) and a vibration mass part (3.1), the two mass damper elements (3) being arranged such that the wedge-shaped bearings (3.3) form a double cone with a radially inwardly oriented cone opening.

8. Damper arrangement according to any of claims 1 - 6,
**characterized in that** an embodiment (2.1) of a vibration mass damper unit (2) has only one mass damper element (3) having a single wedge-shaped bearing (3.3), an elastic layer (3.2) and a vibration mass part (3.1), and has a side part (4.1) opposite the single mass damper element (3), which side part is connected to said single mass damper element (3) via an elastic counter-loading bearing (4.7) which surrounds the functional part (1) in a ring shape.

9. Damper arrangement according to any of claims 1 - 8,
**characterized in that** the individual vibration mass damper units (2, 2.1, 2.2) are connected to one another by individual overlapping components of adjacent vibration mass damper units, such that the damper arrangement (5) results in a compact, closed and abutting, preloaded ring around the selected functional part (1).

10. Damper arrangement according to claim 9, **characterized in that** the two outer curved side parts (4.1) of a first vibration mass damper unit (2, 2.1, 2.2) are torsionally shifted relative to a mass damper element (3) of the same unit in such a way that they are connected in an overlapping manner to an exposed mass damper element (3) of an adjacent second vibration mass damper unit (2, 2.1, 2.2), the side parts (4.1) of which are shifted in the same manner and in the same direction.

11. Damper arrangement according to any of claims 1 - 10,
**characterized in that** the selected concentric functional part (1) is a fixed ring gear of a planetary gear.

12. Use of a damper arrangement according to any of claims 1 to 11 for damping and
decoupling of structure-borne sound in a wind turbine.

13. Planetary gear for a wind turbine, **characterized in that** it has a damper arrangement according to claim 11.

14. Wind turbine comprising a mast, rotor blades, nacelle, transmission and generator,
**characterized in that** it has a planetary gear according to claim 13.

## Revendications

1. Ensemble amortisseur pour une partie fonctionnelle concentrique d'un multiplicateur ou d'un générateur ou d'un moteur, choisie parmi une couronne d'un engrenage planétaire, un stator ou un rotor d'une grande machine ou d'un grand dispositif, pour la réduction des vibrations dirigées par torsion par rapport au composant choisi, en particulier des bruits de structure,
**caractérisé en ce que** l'ensemble amortisseur (5) comprend une pluralité d'unités d'amortissement des vibrations (2) individuelles montées sur la périphérie de la partie fonctionnelle (1) concentrique à amortir sélectionnée, reliées les unes aux autres et formant dans leur ensemble un anneau fermé, dont les contours intérieurs correspondent à la courbure de la partie fonctionnelle (1) à amortir sélectionnée enfermée, et qui présentent respectivement au moins un élément d'amortissement (3) ainsi qu'une pluralité de parties (4) pour la fixation, la liaison et la précontrainte, dans lequel
(i) chaque élément d'amortissement (3) comprend :
(a) une ou plusieurs parties formant masse vibrante (3.1) comportant respectivement un contour extérieur rond ou anguleux et une surface de contact intérieure droite et disposée de manière oblique par rapport à la surface périphérique de la partie fonctionnelle (1) sélectionnée,
(b) un ou plusieurs paliers en forme de coin (3.3) qui présentent, en totalité ou en partie, une surface de contact intérieure courbée avec le rayon de la partie fonctionnelle (1) sélectionnée, et une surface de contact extérieure droite et disposée de manière oblique par rapport à la surface périphérique de la partie fonctionnelle (1) sélectionnée, dans lequel les surfaces de contact extérieure et intérieure droites et disposées de manière oblique forment respectivement un angle de coin (3.4) identique avec la surface périphérique de la partie fonctionnelle (1) sélectionnée,
(c) un ou plusieurs éléments en couches ou couches (3.2) élastiques qui sont disposés entre la surface de contact intérieure droite et disposée de manière oblique de la partie formant masse vibrante (3.1) et la surface de contact extérieure droite et disposée de manière oblique du palier en forme de coin (3.3) et qui sont reliés solidement à ces parties de telle sorte que, dans leur ensemble, ils donnent, en vue latérale, la géométrie d'un polygone qui entoure la partie fonctionnelle (1) sélectionnée, et
(ii) les parties (4) comprennent au moins une partie latérale extérieure (4.1) fermant une unité d'amortissement des vibrations (2) vers l'extérieur, comportant un plus grand, courbée de manière concentrique par rapport au rayon de la partie fonctionnelle (1) sélectionnée, ainsi que des éléments de liaison (4.3) et/ou des éléments de serrage (4.4, 4.5), à l'aide desquels toutes les parties d'une unité d'amortissement des vibrations (2) sont reliées et/ou serrées avec une force axiale (4.8) de sorte que chaque unité d'amortissement des vibrations (2) et donc également l'ensemble de l'ensemble amortisseur (5) est relié de manière fixe à la surface périphérique de la partie fonctionnelle (1) sélectionnée.

2. Ensemble amortisseur selon la revendication 1, **caractérisé en ce que** les parties (4) pour la fixation, la liaison et la précontrainte comprennent au moins une partie de rigidification intérieure (4.2), comportant un plus grand, courbée de manière concentrique par rapport au rayon de la partie fonctionnelle (1) sélectionnée, laquelle partie de rigidification rigidifie l'unité d'amortissement des vibrations (2) respective après que la précontrainte et la pression de l'élément d'amortissement (3) sur la partie fonctionnelle (1) sélectionnée ont été effectuées.

3. Ensemble amortisseur selon la revendication 2, **caractérisé en ce qu'**une partie de rigidification intérieure (4.2) est montée sur une partie formant masse vibrante (3.1) et/ou sur une partie latérale extérieure (4.1).

4. Ensemble amortisseur selon l'une des revendications 1 à 3,
**caractérisé en ce qu'**un espace intermédiaire (3, 5) réglable est prévu entre deux parties formant masse vibrante (3.1) opposées d'une unité d'amortissement des vibrations (2), ou entre une partie formant masse vibrante (3.1) et une partie latérale extérieure (4.1) opposée, moyennant quoi la rigidité de la partie fonctionnelle (3) respective varie et la fréquence d'une unité d'amortissement des vibrations est ainsi adaptée à une fréquence à amortir.

5. Ensemble amortisseur selon la revendication 4, **caractérisé en ce que** l'espace intermédiaire (3.5) est réglable au moyen d'un ou de plusieurs éléments d'écartement (4.6) rigidifiant l'unité d'amortissement des vibrations (2) dans la direction de torsion ou au moyen d'éléments de contre-serrage (4.5).

6. Ensemble amortisseur selon l'une des revendications 1 à 5,
**caractérisé en ce que** les éléments de liaison (4.3) et les éléments de serrage (4.4)(4.5) sont des vis de liaison ou de serrage qui relient et/ou serrent les composants (3.1),(4.1) et éventuellement les composants (4.2) entre eux.

7. Ensemble amortisseur selon l'une des revendications 1 à 6,
**caractérisé en ce qu'**une forme de réalisation (2.2) d'une unité d'amortissement des vibrations (2) présente deux éléments d'amortissement (3) opposés comportant respectivement un palier en forme de coin (3.3), une couche élastique (3.2) et une partie formant masse vibrante (3.1), dans lequel les deux éléments d'amortissement (3) sont disposés de sorte que les paliers en forme de coin (3.3) forment un double cône avec une ouverture de cône orientée radialement vers l'intérieur.

8. Ensemble amortisseur selon l'une des revendications 1 à 6,
**caractérisé en ce qu'**une forme de réalisation (2.1) d'une unité d'amortissement des vibrations (2) ne présente qu'un élément d'amortissement (3) comportant un seul palier en forme de coin (3.3), une couche élastique (3.2) et une partie formant masse vibrante (3.1), ainsi qu'une partie latérale (4.1) opposée à l'unique élément d'amortissement (3) et reliée audit unique élément d'amortissement (3) par l'intermédiaire d'un palier de contre-serrage (4.7) élastique entourant la partie fonctionnelle (1) de manière annulaire.

9. Ensemble amortisseur selon l'une des revendications 1 à 8,
**caractérisé en ce que** les différentes unités d'amortissement des vibrations (2, 2.1, 2.2) sont reliées entre elles par des composants individuels se chevauchant d'unités d'amortissement des vibrations voisines, de sorte que l'ensemble amortisseur (5) donne un anneau compact, fermé et adjacent et précontraint autour de la partie fonctionnelle (1) sélectionnée.

10. Ensemble amortisseur selon la revendication 9, **caractérisé en ce que** les deux parties latérales (4.1) extérieures courbées d'une première unité d'amortissement des vibrations (2, 2.1, 2.2) sont décalées par torsion par rapport à un élément d'amortissement (3) de la même unité de sorte qu'elles sont reliées par chevauchement à un élément d'amortissement (3) exposé d'une seconde unité d'amortissement des vibrations (2, 2.1, 2.2) adjacente dont les parties latérales (4.1) sont décalées de la même manière et dans la même direction.

11. Ensemble amortisseur selon l'une des revendications 1 à 10,
**caractérisé en ce que** la partie fonctionnelle (1) concentrique sélectionnée est une couronne fixe d'un engrenage planétaire.

12. Utilisation d'un ensemble amortisseur selon l'une des revendications 1 à 11 pour l'amortissement et le découplage des bruits de structure dans une éolienne.

13. Engrenage planétaire pour une éolienne, **caractérisé en ce qu'**il présente un ensemble amortisseur selon la revendication 11.

14. Éolienne comprenant une tour, des pales de rotor, une nacelle, un multiplicateur et un générateur,
**caractérisée en ce qu'**elle présente un engrenage planétaire selon la revendication 13.
